# EUROPEAN PATENT SPECIFICATION

(11) **EP 1 824 928 B1**
(45) Date of publication and mention of the grant of the patent: **19.11.2008**
(21) Application number: 05809833.6
(22) Date of filing: 25.11.2005
(51) Int. Cl.: C08L 23/10

(54) **NOVEL PROPYLENE POLYMER BLENDS**
NEUE PROPYLENPOLYMERBLENDS
NOUVEAUX MELANGES PROPYLENE-POLYMERE

(30) Priority: 07.12.2004 EP 04106343
(43) Date of publication of application: 29.08.2007
(73) Proprietor: Borealis Technology Oy, 06201 Porvoo (FI)
(72) Inventor: WOLFSCHWENGER, Johannes, A-4491 Niederneukirchen (AT); GREIN, Christelle, A-4020 Linz (AT); BERNREITNER, Klaus, A-4010 Linz (AT); MYHRE, Elina, N-3942 Porsgrunn (NO); WACHHOLDER, Max, A-4310 Mauthausen (AT); DE MINK, Paul, A-4240 Freistadt (AT)
(74) Representative: Grünecker, Kinkeldey, Stockmair & Schwanhäusser Anwaltssozietät
(86) International application number: PCT/EP2005/012617
(87) International publication number: WO 2006/061109

(56) References cited:
- EP-A- 1 118 638
- WO-A-20/04055101
- US-A- 3 517 086
- PATENT ABSTRACTS OF JAPAN vol. 1997, no. 11, 28 November 1997 (1997-11-28) & JP 09 194651 A (TONEN CHEM CORP), 29 July 1997 (1997-07-29)

## Description

### Field of Invention

The present invention relates to propylene polymer blends which are suitable for thermoforming and extrusion blow molding applications. The inventive propylene polymer blends are particularly suited for these applications because they have excellent balance of stiffness and impact strength especially at low temperatures, excellent transparency and gloss.

### Description of prior art

Polypropylene compositions for technical applications often suffer from shortcomings in the combination of optical performance (high transparency, low haze), low temperature toughness, stiffness and added properties like gloss. Conventional modifications are unable to simultaneously achieve these property requirements.

Especially, optical performance and impact resistance at freezer and refrigerator temperatures are two antagonistic properties:
- In general, a high transparency is achieved by using propylene homopolymers or C₃/C₂ random copolymers. It can even be further improved by incorporating α-nucleating agents or clarifiers. However, both classes of materials are brittle at temperatures below 0° C, which make them inappropriate for applications which require a certain level of toughness.
- Heterophasic propylene copolymers composed of a PP-based matrix and of a dispersed EPR phase have improved low temperature impact strength. This is especially the case when the molecular weight of the EPR is higher than that of the PP-based matrix. These grades are however characterised by low transparency. Lowering the total MFR of the composition would result in sufficient impact strength but poor processability of the composition. Lowering the molecular weight of the EPR fraction to levels below that of the PP-based matrix would improve the transparency but would result in poor impact strength.
- Using too high contents of ethylene in the PP-based matrix in heterophasic systems would lower the stiffness to an undesirable level.

EP 1118638 A1 discloses flexible syndiotactic polypropylene compositions. US 3,517,086 discloses polypropylene compositions comprising a low density PE.

EP 714 923 discloses reactor-made propylene block copolymers resulting from a three-step sequential synthesis. The process for producing these propylene block copolymers is however very complicated and inflexible, since each polymerisation step receives the product of the preceeding stage. On the one hand several reactors are required to polymerize the desired components of the final composition, on the other hand it is very complex to run such a plant in a stable mode for a longer period of time. This is however required for a commercially successful operation. If any fluctuations and problems occur in one of the first two polymerization reactors, especially in the first one, it is necessary to run the plant several hours by producing a transition material which is not fulfilling any quality requirements, thereby creating severe losses in terms of commercial profit.

### Object of the Invention

It is therefore the object of the invention, to provide a propylene polymer composition which is characterised by a combination of excellent optical and mechanical properties. In particular, the inventive propylene polymer compositions shall be characterised by high transparency and gloss, high stiffness and impact strength (e.g. toughness) at ambient, freezer and refrigerator temperatures. Further, the inventive propylene polymer compositions shall be produced in a simple and economic process.

The new compositions shall be used for thermoforming and extrusion blow moulding applications, therefore the MFR of the compositions is preferred to be from 1 - 5 g/10 min. Stiffness is considered to be high with moduli according to ISO 527 of ≥ 1000 MPa. Impact strength, when determined as Wₜₒₜ/mm in the Falling weight test according to ISO 7765/2 shall be at least 5 J/mm at -20°C and at least 10 J/mm at +23 °C. Impact strength, when determined with the Drop Test according to ASTM-D 2463-95 shall be at least 2 m at 0 °C and at least 5 m at 23°C. Haze shall not exceed 20%, when determined on 300 µm sheets and it shall not exceed 50%, when determined on 0.7 mm samples. Gloss must be higher than 100% (when measured on 300 µm sheets).

The above object was achieved with a propylene polymer blend as defined in claim 1 comprising
A) 70 - 92 wt% of a propylene homopolymer having an MFR_{A} (230 °C, 2.16 kg) of 1 - 5 g/10 min,
B) 5 -15 wt% of an elastomeric ethylene-propylene copolymer having an intrinsic viscosity IV of 1.0 - 2.5 dl/g and a propylene content of at least 55 wt%,
   whereby a blend of the propylene homopolymer A and the elastomeric ethylene-propylene copolymer B has an MFR_{A+B} (230 °C, 2.16 kg) of 1 - 5 g/10 min,
   where the MFR_{A+B} > MFR_{C}, preferably MFR_{A+B} > 1.5 x MFR_{C}.
C) 3 -15 wt% of a linear low density polyethylene, having an ethylene content of at least 85 mol%, preferably from 91-99 mol%, and a density of 0.914 - 0.924 g/cm³ and having an MFR_{C} (190 °C, 2.16 kg) of 0.3 - 5 g/10 min, and
D) an α-nucleating agent.

Preferred embodiments are defined in claims 2 to 8 and the following description.

The propylene polymer **A** used for the propylene polymer blend according to the invention is a propylene homopolymer having an MFR_{A} of from 1 - 5 g/10 min, preferably of from 1 - 4 g/10 min. It has been found that for achieving the desired property combination (i.e. total MFR, haze, toughness) it is necessary that the propylene polymer **A** has an MFR within that interval.

A further essential component of the present invention is an elastomeric ethylene-propylene copolymer **B** having an intrinsic viscosity IV of 1.0 - 2.5 dl/g and a high propylene content of at least 55 wt%. Copolymers **B** with a lower propylene content do not result in satisfactory optical properties, especially transparency, but also gloss is too low. Copolymers **B** with a higher intrinsic viscosity do not result in propylene polymer blends having the required transparency.

The amounts and type of components **A** and **B** are selected in order to ensure that a blend consisting of the components **A** and **B** has an MFR_{A+B} of 1 - 5 g/min.

A further essential component of the present invention is a linear low density polyethylene **C.** For achieving the desired combination of good optical properties and mechanical performance at temperatures ≤ 0 °C, it is important for the linear low density polyethylene to have an MFR_{c} (190 °C, 2.16 kg) of from 0.3 to 5 g/10 min. Lower melt indices do not result in a blend having the targeted optical performance and might result in undesirable gloss decrease. When the melt index of the linear low density polyethylene **C** is too high, i.e. when it is > 5 g/10 min the mechanical properties of the compositions, in particular toughness at low temperature, might be not sufficient. It is further essential that the linear low density polyethylene **C** has a density of from 0.914 to 0.924 g/cm³. A density within this interval has been found to be essential for the desired good optical properties.

All components **A, B** and **C** are selected in order to ensure, that MFR_{A+B} ≥ MFR_{C}, preferably MFR_{A+B} > 1.5 x MFR_{C}.

Finally, the propylene polymer blends of the present invention comprise one or more α-nucleating agents. It is preferred that they contain from 0.01 - 2 wt% based on the sum of the weight of components **A** to **C** of α-nucleating agents.

Since the propylene polymer blends of the invention are not the result of a multi-stage polymerisation process, as in e.g. EP 714 923, it was possible to avoid the specific problems associated with that prior art, while simultaneously producing propylene polymer blends with superior and unique property combinations.

The addition of α-nucleating agents to propylene polymers increases their stiffness. α-nucleating agents are therefore added for a high absolute level of stiffness.

Particularly suitable α-nucleating agents in this invention are sodium-2,2'-methylene-bis(4,6-di-t-butylphenyl)phosphate (NA-11, available from Asahi Denka Kogyo (Japan)), 1,3,2,4-di(3',4'-dimethylbenzylidene)sorbitol (MILLAD 3988, available from Milliken) and hydroxy bis-(2,4,8,10-tetra-tert butyl-6-hydroxy-12H-dibenzo(d,g)(1.,3,2) dioxaphosphocin 6-oxidato) aluminium (contained in "ADK STAB NA21E" available from Asahi Denka Kogyo (Japan); "NA21" in the examples).

A further α-nucleation method, herein referred to as "BNT", is a special reactor technique, where the catalyst is prepolymerised with monomers like vinylcyclohexane (VCH). This method is described in greater detail in e.g. EP 0 316 187 A2. For the purpose of this invention "BNT" is referred to as α-nucleating agent.

In order to achieve particularly good optical properties of the blends of the invention, it is preferred to use α-nucleating agents, which are also very active as clarifying agents. An example of such α-nucleating/clarifying agents Is ADK STAB NA21 E from Asahi Denka Kogyo (Japan), which is therefore particularly preferred. Other α-nucleating agents, which are not equally active as clarifying agents, e.g. benzoic acid derivatives, are less preferred in this regard.

According to a preferred embodiment, the linear low density polyethylene **C** has a density of 0.915 - 0.924 g/cm³, more preferably of 0.918 - 0.924 g/cm³.

It is further preferred, that the ethylene-propylene copolymer **B** has an intrinsic viscosity IV of 1.5 - 2.5 dl/g. If the intrinsic viscosity is lower than 1.0 dl/g, the end product might be sticky, if the IV is higher than 2.5 dl/g, transparency of the end product will be lowered to an undesirable level. A preferred lower limit of the intrinsic viscosity IV of 1.5 dl/g further ensures that the end product is not sticky.

According to an embodiment of the present invention, the ethylene-propylene copolymer **B** has a propylene content of at least 60 wt%. If the propylene content of the ethylene-propylene copolymer **B** is less than 55 wt%, transparency suffers and it cannot be adjusted to the desired level without adversely affecting other properties, especially gloss. A still higher propylene content of the ethylene-propylene copolymer **B**, i.e. of at least 60 wt%, is therefore preferred.

The propylene polymer blends of the present invention are preferably produced by mixing
A) 70 - 92 wt% of a propylene homopolymer having an MFR_{A} (230 °C, 2.16 kg) of 1 - 5 g/10 min,
B) 5 -15 wt% of an elastomeric ethylene-propylene copolymer having an intrinsic viscosity IV of 1.0 - 2.5 dl/g and a propylene content of at least 55 wt%,
   whereby a blend of the propylene homopolymer **A** and the elastomeric ethylene-propylene copolymer **B** has an MFR_{A+B} (230 °C, 2.16 kg) of 1 - 5 g/10 min,
C) 3 -15 wt% of a linear low density polyethylene, having an ethylene content of at least 85 mol%, preferably from 91-99 mol%, and a density of 0.914 - 0.924 g/cm³ and having an MFR_{C} (190 °C, 2.16 kg) of 0.3 - 5 g/10 min,
   where the MFR_{A+B} ≥ MFR_{C}, preferably MFR_{A+B} > 1.5 x MFR_{C}, and
D) an α-nucleating agent,
   melting and homogenising and
   cooling and pelletising the mixture

The propylene polymer blends of the present invention are preferably produced by combining the propylene polymer **A** in the form of powder or granules, the elastomeric copolymer **B**, the linear low density polyethylene **C** and the α-nucleating agent **D** in a melt mixing device.

Melt mixing device suited for this process are discontinuous and continuous kneaders, twin screw extruders and single screw extruders with special mixing sections and co-kneaders. The residence time must be chosen such that a sufficiently high degree of homogenisation is achieved.

### Production of propylene polymer A

The propylene polymer may be produced by single- or multistage process polymerisation of propylene or propylene and α-olefin and/or ethylene such as bulk polymerisation, gas phase polymerisation, slurry polymerisation, solution polymerisation or combinations thereof using conventional catalysts. A homo- or copolymer can be made either in loop reactors or in a combination of loop and gas phase reactor. Those processes are well known to one skilled in the art.

A suitable catalyst for the polymerisation of the propylene polymer is any stereospecific catalyst for propylene polymerisation which is capable of polymerising and copolymerising propylene and comonomers at a temperature of 40 to 110°C and at a pressure from 10 to 100 bar. Ziegler Natta catalysts as well as metallocene catalysts are suitable catalysts.

One skilled in the art is aware of the various possibilities to produce propylene homo- and copolymers and will simply find out a suitable procedure to produce suitable polymers which are used In the present invention.

### Production of elastomeric copolymers B

An ethylene propylene elastomeric copolymer may be produced by known polymerisation processes such as solution, suspension and gas-phase polymerisation using conventional catalysts. Zegler Natta catalysts as well as metallocene catalysts are suitable catalysts.

A widely used process is the solution polymerisation. Ethylene, propylene and catalyst systems are polymerised in an excess of hydrocarbon solvent. Stabilisers and offs, if used, are added directly after polymerisation. The solvent and unreacted monomers are then flashed off with hot water or steam, or with mechanical devolatilisation. The polymer, which is In crumb form, is dried with dewatering in screens, mechanical presses or drying ovens. The crumb is formed into wrapped bales or extruded into pellets.

The suspension polymerisation process is a modification of bulk polymerisation. The monomers and catalyst system are injected into the reactor filled with propylene. The polymerisation takes place immediately, forming crumbs of polymer that are not soluble in the propylene. Flashing off the propylene and comonomer completes the polymerisation process.

The gas-phase polymerisation technology consists of one or more vertical fluidised beds. Monomers and nitrogen in gas form along with catalyst are fed to the reactor and solid product is removed periodically. Heat of reaction is removed through the use of the circulating gas that also serves to fluidise the polymer bed. Solvents are not used, thereby eliminating the need for solvent stripping, washing and drying.

The production of ethylene propylene elastomeric copolymers is also described in detail in e.g. US 3,300,459, US 5,919,877, EP 0 060 090 A1 and in a company publication by EniChem "DUTRAL, Ethylene-Propylene Elastomers", pages 1-4 (1991).

Alternatively, elastomeric ethylene-propylene copolymers, which are commercially available and which fulfil the indicated requirements, can be used.

Alternatively, polymers A and B may be produced in a series of reactors, i.e. starting with the production of polymer A in a loop reactor and transferring the product into a gas phase reactor, where copolymer B is polymerised.

### Production of linear low density polyethylene C

It is preferred to use linear low density polyethylene polymers which are commercially available, e.g. FG5190, from Borealis A/S. Alternatively, suitable linear low density polyethylene, may be produced according to the following descriptions.

Linear low density polyethylene is made by the copolymerisation of ethylene and α-olefins. It may be produced in low pressure processes such as gas-phase process (for which the Unipol technology is a typical example), a solution-phase polymerisation process, a slurry process, or combinations thereof like staged gas phase (Union Carbide), staged slurry/gas phase (Borealis) or staged solution phase (Nova). A suitable catalyst for the polymerisation of LLDPE is any stereospecific catalyst which is capable of polymerising and copolymerising ethylene and comononers. Ziegler-Natta as well as metallocene catalysts are suitable catalysts. In the gas-phase process, reactor temperatures are usually below 100 °C with pressures of about 20 bars. In the solution process, reactor temperatures are usually 170-250 °C with pressures of 40 -140 bars. In the solution-phase polymerisation process, reactor temperatures are usually 70 -110 °C with pressures of 30 - 50 bars.

The propylene polymer blends of the present invention are preferably used for thermoforming, e.g. packaging applications for low and subzero temperatures. A further preferred application of the propylene polymer compositions of the present invention are extrusion blow molding applications, e.g. bottles.

### Measurement Methods

### MFR

The melt flow rates were measured with a load of 2.16 kg at 230 °C for polypropylene and at 190 °C for polyethylene. The melt flow rate is that quantity of polymer in grams which the test apparatus standardised to ISO 1133 extrudes within 10 minutes at a temperature of 230 °C or 190 °C respectively, under a load of 2.16 kg.

**Comonomer contents** were measured with Fourier transform infrared spectroscopy (FTIR) calibrated with ¹³C-NMR.

### Intrinsic Viscosity

Intrinsic Viscosity was measured according to DIN ISO 1628-1 (October 1999) in Decalin at 135 °C.

### Falling Weight Test

Impact strength was determined as thickness normalised energy at break (Wₜₒₜ/mm) with the falling weight test according to ISO7765/2 at +23 °C and -20 °C. Test speed was 4.4 m/s. Test specimens were 0.3 mm thick and exhibited a diameter of 80 mm.

### Stiffness

Stiffness on films (modulus MD in the examples) was measured according to ISO 527-3 at 1 mm/min on a 170*15*0.3 mm sample where the length represents the machine direction (e.g. the direction parallel to the flow direction) of the film.

Stiffness on 4 mm thick injection moulded samples was determined at 1 mm/min according to ISO 527 with test specimens described in EN ISO 1873-2 (dog bone shape).

### Gloss

Gloss was determined according to ISO 2813 on sheets (thickness 300 µm) at an angle of 20°.

### Haze

Haze was determined according to ASTM D 1003-92 on sheets (thickness 300 µm) with 10 independent specimens regarding the thermoforming application and on 30*30*0.7 mm samples taken from bottles with 6 independent specimens cut from three different places of the bottle wall regarding the blow moulding application.

### Drop Test

Drop test was performed on bottles at 23°C and 0°C according to ASTM-D 2463-95 The height at which 50% of the bottles break, F₅₀, in a brittle way was recorded.

### Examples

### Preparation of polymers A

The propylene polymers A used for the present invention were prepared according to the following procedure:

### Raw Materials:

Hexane dried over molecular sieve (3/1 OA)
TEAL: 93 % from Sigma-Aldrich
Donor: Dicyclopentyldimethoxysilane: ex Wacker Chemie (99%).
N₂: supplier AGA, quality 5.0; purification with catalyst BASF R0311, catalyst G132 (CuO/ZNO/C), molecular sieves (3/10A) and P₂O₅.
Propylene: polymerisation grade
Hydrogen: supplier AGA, quality 6.0
The catalyst ZN104 is commercially available from Basell.
Sandostab P-EPQ is commercially available from Clariant.

A 5 l autoclave reactor has been purified by mechanical cleaning, washing with hexane and heating under vacuum/N₂ cycles at 160 °C. After testing for leaks with 30 bar N₂ over night reactor has been vacuumed and filled with 1110 g propylene by weighing and 8 nl H₂ by pressure monitoring from a 50 l steel cylinder.

10 mg of ZN104-catalyst are activated for 10 minutes with a mixture of Triethylaluminium (TEAl; solution in hexane 1mol/l) and Dicyclopentyldimethoxysilane as donor (0.3 mol/l in hexane) - in a molar ratio of 5 after a contact time of 5 min - and 10 ml hexane in a catalyst feeder. The molar ratio of TEAl and Ti of catalyst is 250. After activation the catalyst is spilled with 300 g propylene into the stirred reactor with a temperature of 23 °C. Stirring speed is hold at 250 rpm. After 6 min prepolymerisation at 23 °C temperature is increased to 70 °C in about 14 min. After holding that temperature for 1 hour polymerisation is stopped by flashing propylene and cooling to room temperature.

After spilling the reactor with N₂ the homopolymer powder is transferred to a steel container and stabilized with 0.1 wt% of Sandostab P-EPQ and 0.2 wt% of lonol in acetone and dried over night in a hood and additionally for 2 hours at 50 °C under vacuum.

The amount of polymer powder (A3) was 113 g and the MFR (230 °C, 2.16 kg) of the powder was 5 g/10 min.

The homopolymers shown in Table 1 were prepared analogously according to the above procedure:

**Table 1**

| polymer | MFR |
|---|---|
| No. | [g/10 min] |
| A1 | 2.2 |
| A2 | 2.5 |
| A3 | 5 |
| A4 | 1.8 |
| A5 | 0.4 |
| A6 | 0.7 |

### Preparation of elastomeric copolymers B

The elastomeric copolymers of the present invention were prepared according to the following procedure:
A 5 I-reactor (autoclave) filled with about 0.2 barg propylene (polymerisation grade) is pressured up with the required amount of H₂ in order to achieve the targeted intrinsic viscosity of the elastomeric copolymer. Then 300 g of propylene are added.

5 mg of a ZN101 (supplied by Basell) catalyst is contacted with 0.3 ml white oil for about 16 hours and then activated for 5 minutes with a mixture of Triethylaluminium (TEAl; solution in hexane 1 mol/l) and an alkoxysilane (Dicyclopentyldimethoxysilan in the examples) as donor (0.3 mol/l in hexane) - in a molar ratio of 76 using a contact time of 5 min. The molar ratio of TEAl and Ti of catalyst was 380 and TEAl concentration in TEAl/donor mixture 12.6 mg/ml hexane. After activation the catalyst is transferred to the reactor by spilling in with 500 g propylene. After 12 min pre-polymerisation at 30°C a specified amount of ethylene is added to the reactor and the temperature is increased to the target polymerisation temperature (55 °C in the examples). During heating up additional ethylene dosing is started to achieve the target total pressure at the target polymerisation temperature. Total pressure is hold constantly via continuously dosing of ethylene during polymerisation. 30 min after end of prepolymerisation the reaction is stopped by flashing of monomers and cooling.

The polymer is stabilized with 0.1 wt% of Sandostab P-EPQ and 0.2 wt% of lonol in acetone and dried over night in a hood and additionally for 2 hours at 50 °C under vacuum.

Table 2 with example polymerisation conditions:

**Table 2**

| Polymer | H2 | C2 | total | IV | |
|---|---|---|---|---|---|
| No. | | | pressure | | C3 |
| | barg | [g] | [barg] | [dl/g] | [wt %] |
| B1 | 2 | 50 | 29 | 2.40 | 75.0 |
| B3 | 4 | 90 | 34 | 1.95 | 62.5 |
| B5 | 3 | 90 | 34 | 2.60 | 54.0 |
| B8 | 3 | 40 | 29 | 2.06 | 76.0 |

The elastomeric ethylene-propylene copolymers shown in the following table were prepared according to the above procedure(s), except that H₂ and ethylene amounts were varied to achieve different intrinsic viscosities and comonomer concentrations.

**Table 3**

| polymer | i.V. | C3 |
|---|---|---|
| No. | [dl/g] | [wt%] |
| B 1 | 2.40 | 75.0 |
| B2 | 1.63 | 70.0 |
| B3 | 1.95 | 62.5 |
| B4 | 3.50 | 65.0 |
| B5 | 2.60 | 54.0 |
| B6 | 3.20 | 51.0 |
| B7 | 2.03 | 66.0 |
| B8 | 2.06 | 76.0 |
| B9 | 3.20 | 65.0 |
| B10 | 3.50 | 58.0 |

### Linear low density polyethylene C

The linear low density polyethylene polymers **C** which are used for the present invention are selected among commercially available LLDPE copolymers..

The following ethylene homo- and copolymers were used In the examples:

**Table 4**

| | commercial | | | | |
|---|---|---|---|---|---|
| polymer | grade | | comonomer | MFR | density |
| No. | designation | comonomer | content [wt%] | [g/10min] | [g/cm³] |
| C1 | FG5190 | 1-butene | 6 | 1.2 | 0.919 |
| C2 | FT5230 | - | - | 0.8 | 0.923 |

The ethylene polymers C1 (LLDPE) and C2 (LDPE) are commercially available from Borealis A/S.

For the examples, the appropriate amounts of propylene polymers A, elastomeric ethylene-propylene copolymers B, linear low density polyethylene polymers C, conventional additives (0.05 wt% Hydrotalcite (DHT-4A), 0.1 wt% Irgafos 168, 0.1 wt% Irganox 1010, 0.05 wt% Ca-stearate, in each case based on the sum of the weights of components A to C) and nucleating agent D (NA21, based in each case on the sum of the weights of components A to C) were mixed in an intensive mixer (Henschel mixer) for 25 seconds. For CE1-CE5, CE1a and E1-E4 0.1 wt% of NA21 were used, for CE6a, E5a and E2a 0.05 wt% of NA21 were used and for CE12-CE15 and E13-E14 0.2 wt% of NA21 were used. The blends were then compounded in a twin screw extruder at a temperature of 250 °C. The strands were quenched in cold water and pelletised.

### Films

0.3 mm thick films were produced on a castfilm coextrusion line (Barmag 60).

### Bottles

1 I bottles (weight 48.5 g) were extrusion blow moulded. Cycle time was 12 s, melt temperature was 195 °C, melt pressure was 160 bars, die cap was 99.9 %.

The amounts of each component and the results of the measurements are shown in Tables 5 to 7.

**Table 5**

| | **Component A** | | **Component B** | | **MFR_{A+B}** | **Component C** | | **MFR** | |
|---|---|---|---|---|---|---|---|---|---|
| | Type | Content | Type | Content | | Type | Content | | **Influence of** |
| | | [wt%] | | [wt%] | [g/10min] | | [wt%] | [g/10min] | |
| **CE1** | A1 | 85,7 | B1 | 14,3 | 2.0 | | - | 2,0 | **(L)LDPE addition** |
| **E1** | A1 | 77,1 | B1 | 12,9 | 2,0 | C1 | 10 | 1.8 | |
| **CE1a** | A1 | 77,1 | B1 | 12,9 | 2,0 | C2 | 10 | 1,8 | |
| | | | | | | | | | |
| **E1** | A1 | 77,1 | B1 | 12,9 | 2,0 | C1 | 10 | 1,8 | **type of A and B** |
| **E2** | A2 | 77,8 | B2 | 12,2 | 3,2 | C1 | 10 | 3,3 | |
| **E3** | A2 | 78,3 | B3 | 11,7 | 2,8 | C1 | 10 | 2,5 | |
| **CE2** | A3 | 77,1 | B4 | 12,9 | 3,5 | C1 | 10 | 3,1 | |
| **CE3** | A2 | 78,75 | B5 | 11,25 | 1,9 | C1 | 10 | 2,0 | |
| **CE4** | A3 | 78,86 | B6 | 13,14 | 3,3 | C1 | 10 | 3,1 | |
| | | | | | | | | | |
| **E1** | A1 | 77,1 | B1 | 12,9 | 2,0 | C1 | 10 | 1,8 | **amount of B** |
| **E4** | A1 | 81,4 | B1 | 8,8 | 2 | C1 | 10 | 2,1 | |
| **CE5** | A1 | 86 | B1 | 4 | 2 | C1 | 10 | 2 | |
| | | | | | | | | | |
| **E5a** | A2 | 87,8 | B2 | 12,2 | 3,3 | - | - | 3,3 | **amount of C** |
| **E5a** | A2 | 85,2 | B2 | 11,8 | 3,1 | C1 | 3 | 3,1 | |
| **E2a** | A2 | 79,1 | B2 | 10,9 | 3,1 | C1 | 10 | 3,1 | |
| | | | | | | | | | |
| **CE12** | A4 | 87,9 | B7 | 12.1 | 2,0 | C1 | 10 | 2,0 | **LLDPE addition** |
| **E13** | A1 | 79,1 | B7 | 10,9 | 2,0 | C1 | 10 | 2,0 | |
| | | | | | | | | | |
| **E13** | A4 | 79,1 | 87 | 10,9 | 2,0 | C1 | 10 | 2,0 | **material characteristics** |
| **E14** | A4 | 78 | B8 | 12 | 2,1 | C1 | 10 | 2,1 | |
| **CE13** | A2 | 78,8 | B5 | 11,2 | 1,8 | C1 | 10 | 1,8 | |
| **CE14** | A5 | 78,3 | B9 | 11,7 | 0,4 | C1 | 10 | 0,4 | |
| **CE15** | A6 | 75,6 | B10 | 14,4 | 1,2 | C1 | 10 | 1,2 | |

**Table 6**

| | **MFR** | **Modulus** | **Dyn.+23°C** | **Dyn.-20°C** | **Haze** | **Gloss** | |
|---|---|---|---|---|---|---|---|
| | | **MD** | Wtot/mm | Wtot/mm | sheet | | **Influence of** |
| | [g/10] | [MPa] | [J/mm] | [J/mm] | [%] | [%] | |
| **CE1** | 2,0 | 1324 | 14,7 | 4,5 | 26,5 | 107 | **(L)LDPE addition** |
| **E1** | 1,8 | 1096 | 13,4 | 11,9 | 13,3 | 120 | |
| **CE1a** | 1,8 | 1145 | 13,9 | 7,4 | 15,2 | 120 | |
| | | | | | | | |
| **E1** | 1,8 | 1096 | 13,4 | 11,9 | 13,3 | 120 | **type of A and B** |
| **E2** | 3,3 | 1215 | 14,5 | 11,5 | 12,8 | 125 | |
| **E3** | 2,5 | 1115 | 15,0 | 12,1 | 17,6 | 121 | |
| **CE2** | 3,1 | 1113 | 14,9 | 13,2 | 45,3 | 46 | |
| **CE3** | 2,0 | 1193 | 14,2 | 13,B | 29,4 | 72 | |
| **CE4** | 3,1 | 1110 | 15,9 | 14,4 | 54,0 | 42 | |
| | | | | | | | |
| **E1** | 1,8 | 1096 | 13,4 | 11,9 | 13,3 | 120 | **amount of B** |
| **E4** | 2,1 | 1171 | 12 | 6,4 | 11,3 | 121,7 | |
| **CE5** | 2 | 1320 | 3,4 | 1,5 | 9 | 124 | |
| | | | | | | | |
| **CE6a** | 3,3 | 1366 | 10,4 | 4,2 | 20,1 | 117 | **amount of C** |
| **E5a** | 3,1 | 1312 | 12,1 | 6,8 | 17,8 | 121 | |
| **E2a** | 3,1 | 1168 | 11,3 | 11,2 | 13,8 | 122 | |

**Table 7**

| | **MFR** | **Tensile** | **Haze** | **Drop test** | | |
|---|---|---|---|---|---|---|
| | | **Modulus** | bottle | 23°C | 0°C | **Influence of** |
| | [g/10] | [MPa] | [%] | [m] | [m] | |
| **CE12** | 2.0 | 1540 | 54 | < 0,8 | < 0,8 | **LLDPE addition** |
| **E13** | 2.0 | 1280 | 44 | > 5 | 3.0 | |
| | | | | | | |
| **E13** | 2.0 | 1280 | 44 | > 5 | 3.0 | **material characteristics** |
| **E14** | 2.1 | 1270 | 42 | > 5 | 3.5 | |
| **CE13** | 1.8 | 1328 | 59 | 3.2 | 0.9 | |
| **CE14** | 0.4 | 1210 | 75 | > 5 | 3.7 | |
| **CE15** | 1.2 | 1250 | 82 | 4.5 | 2.8 | |

## Claims

1. A propylene polymer blend comprising
A) 70 -92 wt% of a propylene homopolymer having an MFR_{A} (230 °C, 2.16 kg) of 1 - 5 g/10 min,
B) 5 -15 wt% of an elastomeric ethylene-propylene copolymer having an intrinsic viscosity IV determined according to DIN ISO 1628-1 of 1.0 - 2.5 dl/g and a propylene content of at least 55 wt%,
whereby a blend of the propylene homopolymer A and the elastomeric ethylene-propylene copolymer B has an MFR_{A+B} (230 °C, 2.16 kg) of 1 - 5 g/10 min,
where the MFR_{A+B} ≥ MFR_{c}, preferably MFR_{A+B} > 1.5 x MFR_{c},
C) 3 -15 wt% of a linear low density polyethylene, having an ethylene content of at least 85 mol% and a density of 0.914 - 0.924 g/cm³ and having an MFR_{C} (190 °C, 2.16 kg) of 0.3 - 5 g/10 min, and
D) a α-nucleating agent.

2. A propylene polymer blend according to claim 1, **characterised in that** the ethylene-propylene copolymer **B** has an intrinsic viscosity IV of 1.5 - 2.5 dl/g.

3. A propylene polymer blend according to one of claims 1 to 2, **characterised in that** the ethylene-propylene copolymer **B** has a propylene content of at least 60 wt%.

4. A propylene polymer blend according to one of claims 1 to 3, **characterised in that** the α-nucleating agent comprises any one or mixtures of sodium-2,2'-methylene-bis(4,6-di-t-butylphenyl)phosphate, 1,3,2,4-di(3',4'-dimethylbenzylidene)sorbitol, and hydroxy bis-(2,4,8,10-tetra-tert butyl-6-hydroxy-12H-dibenzo(d,g)(1.,3,2) dioxaphosphocin 6-oxidato) aluminium.

5. Process for producing a propylene polymer blend according to any one of claims 1 - 4, **characterised by** mixing
A) 70 - 92 wt% of a propylene homopolymer having an MFR_{A} (230 °C, 2.16 kg) of 1 - 5 g/10 min,
B) 5 -15 wt% of an elastomeric ethylene-propylene copolymer having an intrinsic viscosity IV determined according to DIN ISO 1628-1 of 1.0 - 2.5 dl/g and a propylene content of at least 55 wt%,
whereby a blend of the propylene homopolymer **A** and the elastomeric ethylene-propylene copolymer **B** has an MFR_{A+B} (230 °C, 2.16 kg) of 1 - 5 g/10 min,
where the MFR_{A+B} ≥ MFR_{C}, preferably MFR_{A+B} > 1.5 x MFR_{C},
C) 3 -15 wt% of a linear low density polyethylene, having an ethylene content of at least 85 mol% and a density of 0.914 - 0.924 g/cm³ and having an MFR_{C} (190 °C, 2.16 kg) of 0.3 - 5 g/10 min, and
D) an α-nucleating agent,
melting and homogenising and
cooling and pelletising the mixture.

6. Use of propylene polymer blends according to any one of claims 1 to 4 for thermoforming and extrusion blow molding applications.

7. A propylene polymer blend according to claim 1, **characterized in that** the linear low density polyethylene has an ethylene content form from 91 - 99 mol%.

8. Process for producing a propylene polymer blend according to claim 5, **characterized in that** the linear low density polyethylene has an ethylene content form 91 - 99 mol%.

## Patentansprüche

1. Propylenpolymerblend, umfassend
A) 70 bis 92 Gew.-% eines Propylenhomopolymers mit einem MFR_{A} (230 °C, 2,16 kg) von 1 bis 5 g/10 min,
B) 5 bis 15 Gew.-% eines elastomeren Ethylen-Propylen-Copolymers mit einer inneren Viskosität IV, bestimmt gemäß DIN ISO 1628-1, von 1,0 bis 2,5 dl/g und einem Propylengehalt von wenigstens 55 Gew.-%,
worin ein Blend des Propylenhomopolymers A und des elastomeren Ethylen-Propylen-Copolymers B einen MFR_{A+B} (230 °C, 2,16 kg) von 1 bis 5 g/10 min hat,
worin MFR_{A+B} ≥ MFR_{C}, bevorzugt MFR_{A+B} > 1,5 x MFR_{C}, ist,
C) 3 bis 15 Gew.-% eines linearen Polyethylens niedriger Dichte mit einem Ethylengehalt von wenigstens 85 mol% und einer Dichte von 0,914 bis 0,924 g/cm³ und mit einem MFR_{C} (190 °C, 2,16 kg) von 0,3 bis 5 g/10 min und
D) ein α-Keimbildungsmittel.

2. Propylenpolymerblend gemäß Anspruch 1, **dadurch gekennzeichnet, dass** das Ethlyen-Propylen-Copolymer B eine innere Viskosität IV von 1,5 bis 2,5 dl/g hat.

3. Propylenpolymerblend gemäß einem der Ansprüche 1 bis 2, **dadurch gekennzeichnet, dass** das Ethylen-Propylen-Copolymer B einen Propylengehalt von wenigstens 60 Gew.-% hat.

4. Propylenpolymerblend gemäß einem der Ansprüche 1 bis 3, **dadurch gekennzeichnet, dass** das α-Keimbildungsmittel jedes von oder Mischungen von Natrium-2,2'-methylenbis(4,6-di-t-butylphenyl)phosphat, 1,3,2,4-Di(3',4'-dimethylbenzyliden)sorbit und Hydroxybis(2,4,8,10-tetra-tert-butyl-6-hydroxy-12H-dibenzo(d,g)(1,3,2)dioxaphosphocin-6-oxidato)aluminium umfasst.

5. Verfahren zum Herstellen eines Propylenpolymerblends gemäß einem der Ansprüche 1 bis 4, **gekennzeichnet durch** Vermischen von
A) 70 bis 92 Gew.-% eines Propylenhomopolymers mit einem MFR_{A} (230 °C, 2,16 kg) von 1 bis 5 g/10 min,
B) 5 bis 15 Gew.-% eines elastomeren Ethylen-Propylen-Copolymers mit einer inneren Viskosität IV, bestimmt gemäß DIN ISO 1628-1, von 1,0 bis 2,5 dl/g und einem Propylengehalt von wenigstens 55 Gew.-%,
worin ein Blend des Propylenhomopolymers A und des elastomeren Ethylen-Propylen-Copolymers B einen MFR_{A+B} (230 °C, 2,16 kg) von 1 bis 5 g/10 min hat,
worin MFR_{A+B} ≥ MFR_{C}, bevorzugt MFR_{A+B} > 1,5 x MFR_{C}, ist
C) 3 bis 15 Gew.-% eines linearen Polyethylens niedriger Dichte mit einem Ethylengehalt von wenigstens 85 mol% und einer Dichte von 0,914 bis 0,924 g/cm³ und mit einem MFR_{c} (190 °C, 2,16 kg) von 0,3 bis 5 g/10 min und
D) einem α-Keimbildungsmittel,
Schmelzen und Homogenisieren und
Kühlen und Pelletisieren der Mischung.

6. Verwendung der Propylenpolymerblends gemäß einem der Ansprüche 1 bis 4 für Warmformungs- und Extrusionsblasformungsanwendungen.

7. Propylenpolymerblend gemäß Anspruch 1, **dadurch gekennzeichnet, dass** das lineare Polyethylen niedriger Dichte einen Ethylengehalt von 91 - 99 mol% hat.

8. Verfahren zum Herstellen eines Propylenpolymerblends gemäß Anspruch 5, **dadurch gekennzeichnet, dass** das lineare Polyethylen niedriger Dichte einen Ethylengehalt von 91 bis 99 mol% hat.

## Revendications

1. Mélange de polymères de propylène comprenant :
A) 70 - 92 % en poids d'un homopolymère de propylène ayant un MFR_{A} (230°C, 2,16 kg) de 1 - 5 g/10 min,
B) 5 - 15 % en poids d'un copolymère élastomère éthylène - propylène ayant une viscosité intrinsèque IV déterminée selon DIN ISO 1628-1 de 1,0 - 2,5 dl/g et une teneur en propylène d'au moins 55 % en poids,
un mélange de l'homopolymère de propylène A et du copolymère élastomère éthylène - propylène B ayant un MFR_{A+B} ( 230°C, 2,16 kg) de 1 - 5 g/10 min, et MFR_{A+B} ≥ MFR_{C}, de préférence MFR_{A+B} > 1,5 x MFR_{C},
C) 3 - 15 % en poids d'un polyéthylène linéaire basse densité, ayant une teneur en éthylène d'au moins 85 % en moles et une masse volumique de 0,914 - 0,924 g/cm³ et ayant un MFR_{C} (190°C, 2,16 kg) de 0, 3 - 5 g/10 min, et
D) un agent de nucléation α.

2. Mélange de polymères de propylène selon la revendication 1, **caractérisé en ce que** le copolymère éthylène - propylène B possède une viscosité intrinsèque IV de 1,5 - 2,5 dl/g.

3. Mélange de polymères de propylène selon l'une des revendications 1 à 2, **caractérisé en ce que** le copolymère éthylène - propylène B possède une teneur en propylène d'au moins 60 % en poids.

4. Mélange de polymères de propylène selon l'une des revendications 1 à 3, **caractérisé en ce que** l'agent de nucléation α comprend l'un quelconque du 2,2'-méthylène- bis(4,6- di-t- butyl-phényl) phosphate de sodium, du 1,3,2,4-di(3',4'-diméthylbenzylidène)sorbitol et de l'hydroxy bis-(2,4,8,10-tétra-tert-butyl-6-hydroxy-12H-dibenzo (d,g)(1,3,2) dioxaphosphocin 6-oxidato) aluminium ou des mélanges de ceux-ci.

5. Procédé de production d'un mélange de polymères de propylène selon l'une quelconque des revendications 1 - 4, **caractérisé par** le mélange de
A) 70 - 92 % en poids d'un homopolymère de propylène ayant un MFR_{A} (230°C, 2,16 kg) de 1 - 5 g/10 min,
B) 5 - 15 % en poids d'un copolymère élastomère éthylène - propylène ayant une viscosité intrinsèque IV déterminée selon DIN ISO 1628-1 de 1,0 - 2,5 dl/g et une teneur en propylène d'au moins 55 % en poids,
le mélange de l'homopolymère de propylène A et du copolymère élastomère éthylène - propylène B ayant un MFR_{A+B} ( 230°C, 2,16 kg) de 1 - 5 g/10 min et MFR_{A+B} ≥ MFR_{C}, de préférence MFR_{A+B} > 1,5 x MFR_{C},
C) 3 - 15 % en poids d'un polyéthylène linéaire basse densité, ayant une teneur en éthylène d'au moins 85 % en moles et une masse volumique de 0,914 - 0,924 g/cm³ et ayant un MFR_{C} (190°C, 2,16 kg) de 0, 3 - 5 g/10 min, et
D) un agent de nucléation α,
la fusion et l'homogénéisation et
le refroidissement et la mise en pastilles du mélange.

6. Utilisation de mélanges de polymères de propylène selon l'une quelconque des revendications 1 - 4 pour des applications de thermoformage et de moulage par extrusion - soufflage.

7. Mélange de polymères de propylène selon la revendication 1, **caractérisé en ce que** le polyéthylène linéaire basse densité possède une teneur en éthylène de 91 - 99 % en moles.

8. Procédé de production d'un mélange de polymères de propylène selon la revendication 5, **caractérisé en ce que** le polyéthylène linéaire basse densité possède une teneur en éthylène de 91 - 99 % en moles.
